# EUROPÄISCHE PATENTSCHRIFT

(11) **EP 1 987 466 B1**
(45) Veröffentlichungstag und Bekanntmachung des Hinweises auf die Patenterteilung: **21.02.2018**
(21) Anmeldenummer: 06828630.1
(22) Anmeldetag: 08.12.2006
(51) Int. Cl.: G06F 21/00

(54) **VERFAHREN ZUR SICHERSTELLUNG DER HOHEIT ÜBER DIE AKTIVIERUNG VON ANWENDUNGEN INNERHALB EINES SICHERHEITSMODULS**
METHOD FOR SECURING AUTHORITY OVER ACTIVATION OF APPLICATIONS WITHIN A SECURITY MODULE
PROCÉDÉ POUR GARANTIR L'AUTORITÉ SUR L'ACTIVATION D'APPLICATIONS DANS UN MODULE DE SÉCURITÉ

(30) Priorität: 16.02.2006 DE 102006007566
(43) Veröffentlichungstag der Anmeldung: 05.11.2008
(73) Patentinhaber: Deutsche Telekom AG, 53113 Bonn (DE)
(72) Erfinder: MOOS, Rainer, 57080 Siegen (DE); KIRCH, Stefan, 57489 Drolshagen (DE); FUCHS, Burkhard, 57319 Bad Berleburg (DE); VOLLMER, Torsten, 56472 Nisterberg (DE)
(74) Vertreter: Blumbach · Zinngrebe Patent- und Rechtsanwälte
(86) Internationale Anmeldenummer: PCT/DE2006/002180
(87) Internationale Veröffentlichungsnummer: WO 2007/093141

(56) Entgegenhaltungen:
- EP-A2- 0 730 253
- JP-A- 2003 167 640
- W RANKL UND W WEFFING: "Handbuch der Chipkarten" 2002, HANSER VERLAG , GERMANY , XP002430362 Seite 219, Absatz 3 - Seite 222, Absatz 4 Seite 503, Absatz 1 - Seite 504, Absatz 1

## Beschreibung

Die Erfindung betrifft ein Verfahren zur Freigabe des Zugriffs auf eine Anwendung eines Sicherheitsmoduls.

Als Kopierschutz für Software ist aus JP 2003 167640 A ein Verfahren bekannt, welches vorsieht, ein Programm mit einem Programmteil auszustatten, welches aus der Kennung eines Prozessors ein Passwort berechnet, mit einem hinterlegten Passwort vergleicht und bei mangelnder Übereinstimmung die Ausführung des Programms unterbricht.

Sicherheitsmodule wie insbesondere zum Beispiel Chipkarten stellen Sicherheitsfunktionen wie kryptografische Algorithmen zur Verfügung, mittels derer beispielsweise für das Modul verschlüsselte Informationen wieder entschlüsselt werden können. Mittels elektronischer Signaturen können durch Anwendung des Sicherheitsmoduls zum Beispiel elektronische Informationen zu gerichtsverwertbaren Dokumenten werden.

Sicherheitsmodule und deren Benutzung werden üblicherweise durch Vergabe von Persönlichen-Identifikations-Nummern (PIN) auf rechtmäßige Benutzer personalisiert, d.h. nur der Inhaber der PIN kann das Modul nutzen.

Informationstechnische Grundlagen wie die Authentisierung im Chipkartenbereich basierend auf dem Challenge-Response-Verfahren oder die Prüfung einer Geheimzahl, insbesondere das PIN- und PUK-Verfahren (Personal Unblocking Key), sowie die Verwendung von Transport-PINs, werden beispielsweise in "Handbuch der Chipkarten", 2002, von W. Rankl und W. Weffing, beschrieben.

Die Übermittlung der PIN an den Benutzer erfolgt nach dem Stand der Technik mit Hilfe von PIN-Briefen derart, dass die PIN nur nach Aufbrechen eines Sicherheitsformulars durch den Empfänger gelesen werden kann. Alternativ sind Verfahren bekannt, bei denen die PIN nach Erhalt der Karte initial durch den Empfänger vergeben wird. Dabei wird, wie beispielsweise bei dem in DE 195 07 044 C2 beschriebenen Null-PIN-Verfahren, die Unversehrtheit des Sicherheitsmoduls technisch nachprüfbar sichergestellt.

Beim Einsatz von PIN-Briefen kann der Inhaber die PINgeschützte Applikation im Sicherheitsmodul erst nach Erhalt der PIN nutzen. Damit kann der Herausgeber der Karten die Aktivierung einer Applikation zeitlich verzögern, indem er den PIN-Brief erst dann versendet, wenn die Applikation auch tatsächlich genutzt werden soll. Diese Möglichkeit entfällt nach dem Stand der Technik zur Zeit beim Null-PIN-Verfahren. Der Inhaber eines Sicherheitsmoduls kann zum Beispiel durch Fehlbedienung des Moduls den Auslieferungsstatus aufheben, indem er zum Beispiel die PIN zu einer falschen Applikation vergibt. Bestimmte Anwendungsszenarien erfordern aber gegebenenfalls zu einem nicht bekannten Zeitpunkt in der Zukunft die Applikation im Auslieferungszustand.

Der vorliegenden Erfindung liegt daher die Aufgabe zugrunde, ein Verfahren verfügbar zu machen, mit dem auf einfache Weise eine Anwendung in einem Sicherheitsmodul zu einem wählbaren Zeitpunkt nach Bereitstellen des Sicherheitsmoduls für den Benutzer erstmalig freigegeben werden kann.

Das oben genannte technische Problem wird mit den Verfahrensschritten des Anspruchs 1 gelöst.

Dementsprechend sieht ein erfindungsgemäßes Verfahren zur Freigabe des Zugriffs auf eine vorbestimmte Funktion eines Sicherheitsmoduls auf Veranlassung einer autorisierten Stelle vor, ein Sicherheitsmodul bereitzustellen, dem Sicherheitsmodul ein Datum zu präsentieren, das präsentierte Datum in Abhängigkeit eines vorgegebenen Geheimnisses zu prüfen und nur nach erfolgreicher Prüfung des präsentierten Datums den Zugriff auf die vorbestimmte Funktion durch das Sicherheitsmodul freizugeben.

In Deutschland sollen nach dem Willen der Bundesregierung alle Sicherheitsmodule wie zum Beispiel die elektronischen Pässe, elektronischen Personalausweise oder auch die elektronische Gesundheitskarte, die als Chipkarten in großen Stückzahlen ausgegeben werden, mit einer sogenannten "schlafenden qualifizierten Signatur" ausgeliefert werden. Hierbei ist es sehr wichtig, dass die Inhaber solcher Module diese nicht schon vor dem Bedarfsfall für die Nutzung unbrauchbar machen.

Ein Grundgedanke der Erfindung ist es daher, eine Applikation in einem Sicherheitsmodul solange im Auslieferungszustand zu erhalten, bis eine autorisierte Stelle die Benutzung freigibt. Für den oben beschriebenen Anwendungszweck ist das Sicherheitsmodul vorzugsweise als Chipkarte ausgebildet.

Je nach Ausführungsform der Erfindung kann das zu prüfende Datum dem Sicherheitsmodul auf unterschiedliche Weise präsentiert werden. Beispielsweise kann das Datum manuell von einem autorisierten Benutzer über ein entsprechendes Schreib-/ Lesegerät eingegeben oder automatisiert durch eine entsprechend vorbereitete Vorrichtung bereitgestellt werden, über welche die autorisierte Stelle die Hoheit besitzt und in welcher das vorgegebene Geheimnis gespeichert ist.

Vorzugsweise ist ferner das vorgegebene Geheimnis im Sicherheitsmodul gespeichert und der Schritt des Prüfens des präsentierten Datums erfolgt in Abhängigkeit des gespeicherten Geheimnisses.

In einer ersten Ausführungsform der Erfindung erfolgt das Prüfen des präsentierten Datums durch Vergleichen des präsentierten Datums mit dem vorgegebenen Geheimnis, wobei die Freigabe des Zugriffs auf die vorbestimmte Funktion nur erfolgt, wenn das präsentierte Datum mit dem vorgegebenen Geheimnis übereinstimmt.

Die Sicherheit des vorgegebenen Geheimnisses kann erhöht werden, indem die Sicherheitsmodule vom Geheimnis abgeleitete modulindividuelle Geheimnisse enthalten. Dementsprechend ist in einer zweiten Ausführungsform der Erfindung vorteilhaft ein modulindividuelles Geheimnis im Sicherheitsmodul gespeichert, wobei das präsentierte Datum mit dem modulindividuellen Geheimnis verglichen wird und die Freigabe des Zugriffs auf die vorbestimmte Funktion nur erfolgt, wenn das präsentierte Datum mit dem modulindividuellen Geheimnis übereinstimmt. Vorzugsweise ist das modulindividuelle Geheimnis einmalig, so dass jedem von einem Hersteller produzierten Sicherheitsmodul ein eigenes, von allen anderen modulindividuellen Geheimnissen unterschiedliches Geheimnis zugeordnet ist. Das jeweilige modulindividuelle Geheimnis kann dabei vorteilhaft von einem vorgegebenen allgemeinen Geheimnis abgeleitet sein, welches für alle Sicherheitsmodule identisch ist.

Zweckmäßigerweise erfolgt das Erzeugen des im Sicherheitsmodul gespeicherten, modulindividuellen Geheimnisses unter Einbeziehung eines Identifizierers, welcher das Sicherheitsmodul eindeutig identifiziert. Besonders vorteilhaft wird zu diesem Zweck eine vorgegebene Zuordnungsvorschrift eingesetzt, so dass das modulindividuelle Geheimnis eines Sicherheitsmoduls aus dem Identifizierer des Moduls gebildet werden kann. Die Zuordnungsvorschrift kann beispielsweise eine Zuordnungstabelle umfassen, in der für jeden Identifizierer das entsprechende modulindividuelle Geheimnis hinterlegt ist. Alternativ kann die Zuordnungsvorschrift vorteilhaft einen Algorithmus umfassen, mittels dessen das modulindividuelle Geheimnis aus dem Identifizierer berechenbar ist, gegebenenfalls unter Einbeziehung eines allgemeinen Geheimnisses.

Das Verfahren sieht vorzugsweise vor, dass der im Sicherheitsmodul gespeicherte Identifizierer zu der autorisierten Stelle übertragen und das zu präsentierende Datum durch die autorisierte Stelle mittels der vorgegebenen Zuordnungsvorschrift aus dem empfangenen Identifizierer gebildet wird. Das Übertragen des Identifizierers vom Sicherheitsmodul zur autorisierten Stelle erfolgt zweckmäßigerweise in Antwort auf ein entsprechendes, zuvor von der autorisierten Stelle zum Sicherheitsmodul übertragenen Anforderungssignals.

Das vorgegebene Geheimnis ist somit dem Hersteller oder Herausgeber des Sicherheitsmoduls und dem Sicherheitsmodul selbst bekannt. Der Herausgeber des Moduls kann das vorgegebene Geheimnis und/oder die vorgegebene Zuordnungsvorschrift an autorisierte Stellen weitergeben. Zur Sicherstellung, dass die geheimen Informationen nicht frei bekannt wird, kommunizieren der Hersteller oder Herausgeber und die autorisierten Stellen kryptografisch gesichert miteinander.

Die vorbestimmte Funktion, welche durch Präsentation des vorgegebenen Geheimnisses freigegeben wird, umfasst vorzugsweise eine durch einen persönlichen Identifikationscode, insbesondere durch eine PIN (Persönliche Identifikationsnummer), gesicherte Anwendung.

Zum Zweck der Ver- und Entschlüsselung sowie der Signierung von Daten ermöglicht die gesicherte Anwendung besonders vorteilhaft den Zugriff auf einen kryptografischen Algorithmus und/oder einen kryptografischen Schlüssel und/oder eine elektronische Signatur. Die Erfindung ist jedoch nicht auf diesen Einsatzzweck beschränkt, die gesicherte Anwendung kann beispielsweise auch den Zugriff auf besonders zu sichernde Daten oder Funktionen ermöglichen.

Mit besonderem Vorteil ist die gesicherte Anwendung dazu ausgebildet, eine Erstbenutzung der Anwendung festzustellen und anzuzeigen. Beispielsweise kann die gesicherte Anwendung zu diesem Zweck eine Null-PIN-Funktionalität umfassen, wie sie in DE 195 07 044 C2 beschrieben ist. Dazu wird der persönliche Identifikationscode vor erstmaliger Inbetriebnahme des Sicherheitsmoduls auf einen vorbestimmten ersten Wert, beispielsweise eine Folge von Nullen gesetzt, bei der die gesicherte Anwendung gesperrt ist. Nach erfolgreicher Präsentation des vorgegebenen Geheimnisses steht die Null-PIN-Funktionalität zur Verfügung und bei Eingabe eines Wertes durch den Benutzer wird zunächst geprüft, ob der eingegebene Wert mit dem vorbestimmten ersten Wert des persönlichen Identifikationscodes übereinstimmt. Wenn ja, ist sichergestellt, dass die gesicherte Anwendung noch nicht freigeschaltet worden ist. Anschließend wird der vorbestimmte erste Wert gelöscht und/oder durch einen dem Benutzer zugeordneten persönlichen Identifikationscode ersetzt. Auf diese Weise wird sichergestellt, dass die gesicherte Anwendung nur ein einziges Mal durch den Benutzer freigeschaltet werden kann. Alternativ können auch andere bekannte Transport-PIN-Verfahren zum Einsatz kommen.

Die vorliegende Erfindung löst somit das vorgenannte technische Problem durch eine technische Implementierung im Sicherheitsmodul derart, dass nur eine autorisierte Stelle den Zugriff auf beispielsweise eine PIN-Funktionalität freigeben kann. Technisch wird dieser Schutz während der Erzeugung des Sicherheitsmoduls innerhalb der zu schützenden Applikation realisiert, indem die Bereiche, in denen die PIN-Informationen für das Betriebssystem des Sicherheitsmoduls liegen, für den Auslieferungsstatus deaktiviert werden, d.h. von außen sind nach Auslieferung keine PIN-Funktionen nutzbar und somit können PINgeschützte Funktionen dieser Applikation nicht genutzt werden.

Die Aktivierung der Bereiche, in denen die PIN-Informationen liegen, erfolgt nur nach einer erfolgreichen Präsentation eines vorher festzulegenden Geheimnisses gegenüber dem Betriebssystem des Sicherheitsmoduls. Hierzu können beispielsweise Standardkommandos benutzt werden, die das Betriebssystem für die Applikation nur nach der Präsentation des zugehörigen Geheimnisses akzeptiert.

Die Erfindung stellt somit vorteilhaft ein Verfahren zur Sicherstellung der Hoheit über die Anwendungen innerhalb eines Sicherheitsmoduls bereit, derart, dass die Persönliche-Identifikations-Nummer-Funktionalität (Null-PIN oder Transport-PIN) oder die Erstbenutzer-Funktion nur auf Veranlassung einer autorisierten Stelle in Aktion gesetzt werden kann, indem das Betriebssystem des Sicherheitsmoduls die oben genannte Funktionalität erst nach erfolgreicher Präsentation eines entsprechenden Geheimnisses zur Verfügung stellt.

Die Erfindung wird nachfolgend anhand eines Ausführungsbeispiels in Verbindung mit den beiliegenden Zeichnungen näher erläutert. Darin zeigen:
- Fig. 1: eine erste Ausführungsform eines Sicherheitsmoduls, welches mit einer Einrichtung einer autorisierten Stelle verbunden ist, und
- Fig. 2: eine zweite Ausführungsform eines Sicherheitsmoduls, welches mit einer Einrichtung einer autorisierten Stelle verbunden ist.

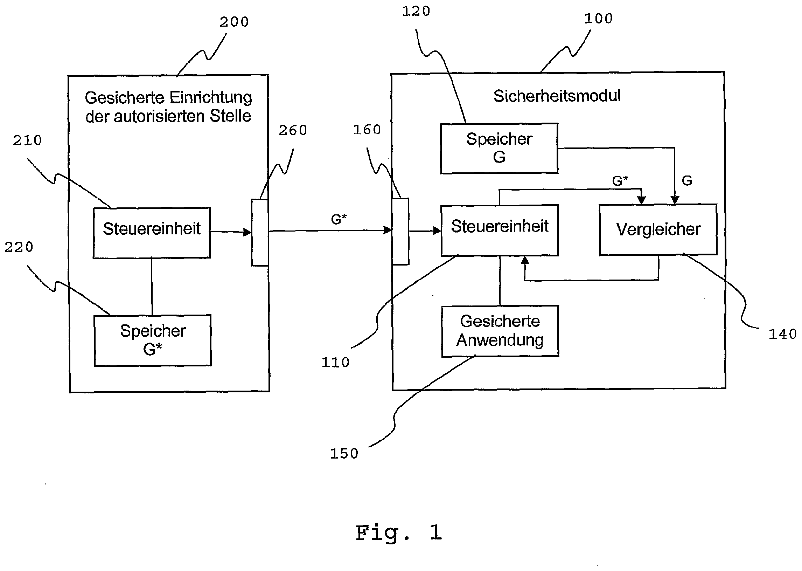

Fig. 1 zeigt beispielhaft ein Sicherheitsmodul 100, welches im vorliegenden Ausführungsbeispiel eine Chipkarte ist. Die Chipkarte 100 enthält eine gesicherte Anwendung 150, welche vorliegend beispielsweise zur sicheren Aufbewahrung eines kryptografischen Schlüssels dient oder bei der es sich um einen Prozess zur Durchführung einer elektronischen Signatur handelt. Besonders vorteilhaft umfasst die gesicherte Anwendung 150 eine qualifizierte elektronische Signatur, welche insbesondere den Sicherheitsanforderungen des deutschen Signaturgesetzes entspricht.

Die gesicherte Anwendung 150 ist mit Hilfe einer PIN (Persönliche Identifikationsnummer) geschützt, wobei eine Transport-PIN- bzw. Null-PIN-Funktionalität vorgesehen ist, die wie oben beschrieben ein erstmaliges Freischalten der gesicherten Anwendung durch den Benutzer ermöglicht, wobei der Benutzer feststellen kann, ob eine Erstbenutzung der gesicherten Anwendung vorliegt.

Diese Funktionalität würde es dem Benutzer prinzipiell ermöglichen, die gesicherte Anwendung zu einem von ihm gewählten Zeitpunkt freizuschalten. Der Grundgedanke der Erfindung ist es hingegen, die Aktivierung der gesicherten Anwendung durch eine autorisierte Stelle zu kontrollieren.

Zu diesem Zweck sieht die Erfindung vor, den Zugriff auf die gesicherte Anwendung und damit beispielsweise auf die Null-PIN-Funktionalität nur nach erfolgreicher Präsentation eines vorgegebenen Geheimnisses freizugeben.

Zur Freigabe des Zugriffs auf die gesicherte Anwendung 150 ist das Sicherheitsmodul 100 mit einer Einrichtung 200 der autorisierten Stelle über Schnittstellen 160 und 260 verbunden. Die Einrichtung 200 kann beispielsweise als Schreib-/Lesegerät für Chipkarten ausgebildet sein. In einem Speicher 220 der Einrichtung 200 ist ein zu präsentierendes Geheimnis G* gespeichert, welches die autorisierte Stelle beispielsweise vom Herausgeber des Sicherheitsmoduls 100 auf kryptografisch gesichertem Weg erhalten hat. Über die Steuereinheit 210 der Einrichtung 200 wird der Wert G* dem Sicherheitsmodul 100 präsentiert.

Die Steuereinheit 110 des Sicherheitsmoduls 100 leitet den empfangenen Wert G* an einen Vergleicher 140 weiter, in welchem dieser mit einem im Speicher 120 gespeicherten Geheimnis G verglichen wird. Die Steuereinheit 110 erhält das Ergebnis des Vergleichs von dem Vergleicher 140 und gibt bei Übereinstimmung des Wertes G* mit dem vorgegebenen Geheimnis G den Zugriff auf die gesicherte Anwendung 150 frei.

Die Freigabe des Zugriffs auf die gesicherte Anwendung 150 durch erfolgreiche Präsentation des vorgegebenen Geheimnisses kann besonders vorteilhaft einmalig erfolgen, so dass nach einmaliger erfolgreicher Präsentation des vorgegebenen Geheimnisses der Zugriff für den Benutzer des Sicherheitsmoduls dauerhaft freigegeben ist. Dadurch wird es ermöglicht, dem Benutzer des Sicherheitsmoduls zu einem durch die autorisierte Stelle wählbaren Zeitpunkt nach Bereitstellung des Sicherheitsmoduls die gesicherte Anwendung im Auslieferungszustand bereitzustellen.

Alternativ kann für jeden Zugriff auf die gesicherte Anwendung 150 eine erfolgreiche Präsentation des vorgegebenen Geheimnisses vorgesehen sein.

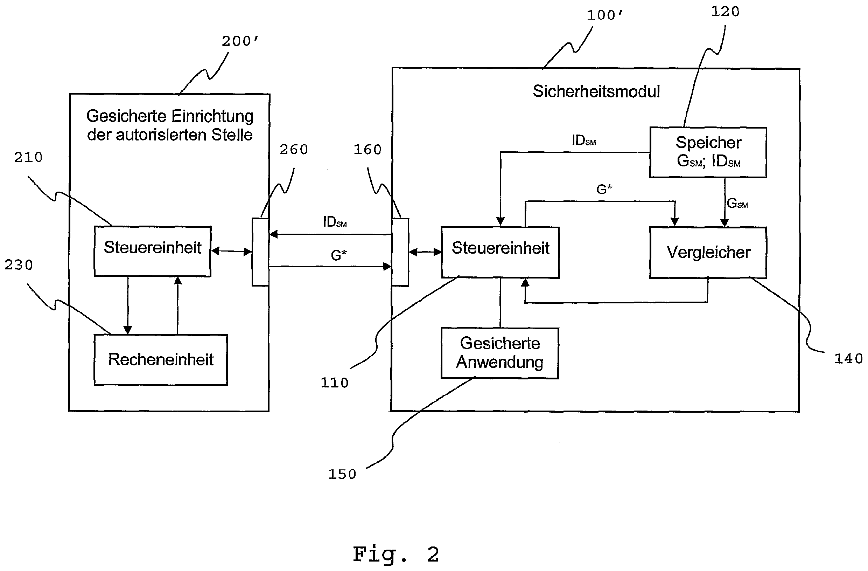

Die in Fig. 2 dargestellte Ausführungsform eines Sicherheitsmoduls 100' stellt eine Weiterbildung des in Fig. 1 dargestellten Sicherheitsmoduls 100 dar, wobei in dem Speicher 120 des Sicherheitsmoduls 100' zur Erhöhung der Sicherheit ein modulindividuelles Geheimnis G_{SM} abgelegt ist, welches vorzugsweise aus einem das Sicherheitsmodul 100' eindeutig identifizierenden Identifizierer ID_{SM} berechnet ist. Der Identifizierer ID_{SM} ist vorteilhaft ebenfalls im Speicher 120 gespeichert.

Nach Verbinden des Sicherheitsmoduls 100' mit der Einrichtung 200' der autorisierten Stelle über Schnittstellen 160 und 260 wird in diesem Ausführungsbeispiel zunächst ein Anforderungssignal von der Einrichtung 200' zum Sicherheitsmodul 100' übertragen. In Antwort auf das Anforderungssignal überträgt das Sicherheitsmodul 100' den im Speicher 120 gespeicherten Identifizierer ID_{SM} zur Einrichtung 200'. In der Einrichtung 200' wird der zu präsentierende Wert G* mittels der Recheneinheit 230 und unter Verwendung einer vorgegebenen Zuordnungsvorschrift aus dem empfangenen Identifizierer ID_{SM} gebildet und dem Sicherheitsmodul 100' mittels der Steuereinheit 210 und den Kommunikationsschnittstellen 260 und 160 präsentiert.

Die Zuordnungsvorschrift wurde in diesem Ausführungsbeispiel vorzugsweise auf kryptografisch gesichertem Weg vom Hersteller des Sicherheitsmoduls zur autorisierten Stelle übermittelt. Die vom Hersteller erhaltene Zuordnungsvorschrift kann vorteilhaft so ausgebildet sein, dass mit ihr nur für eine vorgegebene Gruppe von Sicherheitsmodulen gültige modulindividuelle Geheimnisse erzeugbar sind.

Die Steuereinheit 110 des Sicherheitsmoduls 100' leitet den empfangenen Wert G* an den Vergleicher 140 weiter, in welchem dieser mit dem im Speicher 120 gespeicherten, modulindividuellen Geheimnis G_{SM} verglichen wird. Die Steuereinheit 110 erhält das Ergebnis des Vergleichs von dem Vergleicher 140 und gibt bei Übereinstimmung des Wertes G* mit dem vorgegebenen modulindividuellen Geheimnis G_{SM} den Zugriff auf die gesicherte Anwendung 150 frei.

## Patentansprüche

1. Verfahren zur Freigabe des Zugriffs auf eine vorbestimmte Funktion (150) eines Sicherheitsmoduls (100, 100') auf Veranlassung einer autorisierten Stelle (200, 200') mit folgenden Schritten:
- Bereitstellen eines Sicherheitsmoduls (100, 100'),
- Präsentieren eines zu präsentierenden Geheimnisses (G*) dem Sicherheitsmodul (100, 100') durch eine Einrichtung (200) der autorisierten Stelle, wobei das zu präsentierende Geheimnis (G*) oder eine vorgegebene Zuordnungsvorschrift vom Hersteller des Sicherheitsmoduls (100, 100') zu der autorisierten Stelle (200, 200') mittels einer kryptografisch gesicherten Kommunikation übermittelt wird,
- Prüfen des präsentierten Geheimnisses (G*) durch das Sicherheitsmodul (100, 100') in Abhängigkeit eines vorgegebenen Geheimnisses (G, G_{SM}),
- Freigeben des Zugriffs auf die vorbestimmte Funktion (150) durch das Sicherheitsmodul (100, 100') nur nach erfolgreicher Prüfung des präsentierten Geheimnisses (G*), **dadurch gekennzeichnet, dass** die vorbestimmte Funktion (150) eine durch einen persönlichen Identifikationscode gesicherte Anwendung umfasst, die zum Prüfen einer Erstbenutzung der Anwendung ausgebildet ist.

2. Verfahren nach Anspruch 1, wobei das Sicherheitsmodul (100, 100') als Chipkarte ausgebildet ist.

3. Verfahren nach Anspruch 1 oder 2, wobei das vorgegebene Geheimnis (G, G_{SM}) im Sicherheitsmodul (100, 100') gespeichert ist und der Schritt des Prüfens des präsentierten Geheimnisses (G*) in Abhängigkeit des gespeicherten Geheimnisses (G, G_{SM}) erfolgt.

4. Verfahren nach einem der vorstehenden Ansprüche, wobei der Schritt des Prüfens des präsentierten Geheimnisses (G*) ein Vergleichen mit dem vorgegebenen Geheimnis (G, G_{SM}) umfasst und die Freigabe des Zugriffs auf die vorbestimmte Funktion (150) erfolgt, wenn das präsentierte Geheimnis (G*) mit dem vorgegebenen Geheimnis (G) übereinstimmt.

5. Verfahren nach einem der vorstehenden Ansprüche, wobei das vorgegebene Geheimnis (G, G_{SM}) ein modulindividuelles Geheimnis (G_{SM}) ist.

6. Verfahren nach Anspruch 5, wobei das zu präsentierende Geheimnis (G*) in Abhängigkeit eines im Sicherheitsmodul (100') gespeicherten Identifizierers (ID_{SM}), welcher das Sicherheitsmodul (100') eindeutig identifiziert, gebildet wird.

7. Verfahren nach Anspruch 6, wobei der im Sicherheitsmodul (100') gespeicherte Identifizierer (ID_{SM}) zu der autorisierten Stelle (200') übertragen und das zu präsentierende Geheimnis (G*) durch die autorisierte Stelle (200') mittels der vorgegebenen Zuordnungsvorschrift aus dem empfangenen Identifizierer (ID_{SM}) gebildet wird.

8. Verfahren nach einem der vorstehenden Ansprüche, wobei die gesicherte Anwendung eine Null-PIN-Funktionalität zum Prüfen der Erstbenutzung umfasst.

9. Verfahren nach einem der vorstehenden Ansprüche, wobei die gesicherte Anwendung den Zugriff auf einen kryptografischen Algorithmus und/oder einen kryptografischen Schlüssel und/oder eine elektronische Signatur ermöglicht.

## Claims

1. A method for enabling access to a predetermined function (150) of a security module (100, 100') on behalf of an authorized authority (200, 200'), comprising the steps of:
- providing a security module (100, 100');
- presenting a secret (G*) to be presented to the security module (100, 100') by a device (200) of the authorized authority, wherein the secret (G*) to be presented or a predefined association rule is transmitted from the manufacturer of the security module (100, 100') to the authorized authority (200, 200') via cryptographically secured communication;
- verifying the presented secret (G*) by the security module (100, 100') in dependence of a predefined secret (G, G_{SM}) ;
- enabling access to the predetermined function (150) by the security module (100, 100') only after successful verification of the presented secret (G*); **characterized in that** the predetermined function (150) comprises an application that is secured by a personal identification code, which application is adapted for verifying an initial use of the application.

2. The method according to claim 1, wherein the security module (100, 100') is provided in the form of a smart card.

3. The method according to claim 1 or 2, wherein the predefined secret (G, G_{SM}) is stored in the security module (100, 100'), and the step of verifying the presented secret (G*) is performed in dependence of the stored secret (G, G_{SM}).

4. The method according to any one of the preceding claims, wherein the step of verifying the presented secret (G*) comprises a comparison with the predefined secret (G, G_{SM}), and wherein access to the predetermined function (150) is enabled if the presented secret (G*) matches the predefined secret (G).

5. The method according to any one of the preceding claims, wherein the predefined secret (G, G_{SM}) is a module-specific secret (G_{SM}).

6. The method according to claim 5, wherein the secret (G*) to be presented is created as a function of an identifier (ID_{SM}) stored in the security module (100'), which uniquely identifies the security module (100').

7. The method according to claim 6, wherein the identifier (ID_{SM}) stored in the security module (100') is transmitted to the authorized authority (200') and the secret (G*) to be presented is created by the authorized authority (200') based on the received identifier (ID_{SM}) using the predefined association rule.

8. The method according to any one of the preceding claims, wherein the secure application comprises a zero PIN functionality for verifying initial use.

9. The method according to any one of the preceding claims, wherein the secure application enables access to a cryptographic algorithm and/or to a cryptographic key and/or to an electronic signature.

## Revendications

1. Procédé d'activation de l'accès à une fonction prédéfinie (150) d'un module de sécurité (100, 100') à la demande d'un site habilité (200, 200'), comprenant les étapes suivantes :
- la fourniture d'un module de sécurité (100, 100'),
- la présentation d'un code secret (G*) à présenter au module de sécurité (100, 100') par l'intermédiaire d'un système (200) du site habilité, où le code secret (G*) à présenter ou une consigne d'affectation prédéfinie est transmis(e) par le fabricant du module de sécurité (100, 100') au site habilité (200, 200') au moyen d'une communication sécurisée par cryptographie,
- la vérification du code secret (G*) présenté au moyen du module de sécurité (100, 100') en fonction d'un code secret (G, G_{SM}) prédéfini,
- l'activation de l'accès à la fonction prédéfinie (150) au moyen du module de sécurité (100, 100') uniquement une fois la vérification du code secret (G*) présenté réalisée avec succès,
**caractérisé en ce que** la fonction prédéfinie (150) comporte une application sécurisée par un code d'identification personnel, qui est conçue pour vérifier une première utilisation de l'application.

2. Procédé selon la revendication 1, dans lequel le module de sécurité (100, 100') est réalisé sous la forme d'une carte à puce.

3. Procédé selon la revendication 1 ou 2, dans lequel le code secret (G, G_{SM}) prédéfini est mis en mémoire dans le module de sécurité (100, 100') et l'étape de vérification du code secret (G*) présenté est réalisée en fonction du code secret (G, G_{SM}) mis en mémoire.

4. Procédé selon l'une quelconque des revendications précédentes, dans lequel l'étape de vérification du code secret (G*) présenté comporte une comparaison au code secret (G, G_{SM}) prédéfini et l'activation de l'accès à la fonction prédéfinie (150) est réalisée lorsque le code secret (G*) présenté concorde avec le code secret (G) prédéfini.

5. Procédé selon l'une quelconque des revendications précédentes, dans lequel le code secret (G, G_{SM}) prédéfini est un code secret (G_{SM}) individuel pour chaque module.

6. Procédé selon la revendication 5, dans lequel le code secret (G*) à présenter est formé en fonction d'un identifiant (ID_{SM}) mis en mémoire dans le module de sécurité (100'), lequel identifiant identifie clairement le module de sécurité (100').

7. Procédé selon la revendication 6, dans lequel l'identifiant (ID_{SM}) mis en mémoire dans le module de sécurité (100') est transmis au site habilité (200') et le code secret (G*) à présenter est formé à partir de l'identifiant (ID_{SM}) reçu par le site habilité (200') au moyen de la consigne d'affectation prédéfinie.

8. Procédé selon l'une quelconque des revendications précédentes, dans lequel l'application sécurisée comporte une fonctionnalité PIN zéro (Null-PIN) pour la vérification de la première utilisation.

9. Procédé selon l'une quelconque des revendications précédentes, dans lequel l'application sécurisée permet l'accès à un algorithme cryptographique et/ou à une clé cryptographique et/ou à une signature électronique.
